# EUROPÄISCHE PATENTSCHRIFT

(11) **EP 2 492 517 B1**
(45) Veröffentlichungstag und Bekanntmachung des Hinweises auf die Patenterteilung: **16.08.2017**
(21) Anmeldenummer: 12000805.7
(22) Anmeldetag: 08.02.2012
(51) Int. Cl.: F16B 7/00

(54) **Verbindungsanordnung für Bambusrohre**
Connection assembly for bamboo pipes
Agencement de liaison pour tuyaux en bambou

(30) Priorität: 28.02.2011 DE 102011012610; 12.03.2011 DE 102011013783; 04.05.2011 DE 102011100334; 24.06.2011 DE 102011105499
(43) Veröffentlichungstag der Anmeldung: 29.08.2012
(73) Patentinhaber: Jansen, Sebastian, 71636 Ludwigsburg (DE)
(72) Erfinder: Jansen, Sebastian, 71636 Ludwigsburg (DE)

(56) Entgegenhaltungen:
- CN-Y- 2 761 727
- US-A- 2 703 724

## Beschreibung

Die Erfindung betrifft eine Verbindungsanordnung für Bambusrohre insbesondere eines Kinderwagens, wobei das Bambusrohr eine Querbohrung aufweist, die zu beiden Seiten des Bambusrohres in der Bambusrohraußenwand eine Bohrungsöffnung bildet.

Hierbei wird unter einem "Bambusrohr" auch ein Bambusstab aus Bambus-Vollmaterial verstanden.

In der DE 43 33 029 C2 wird ein Tragwerk aus Bambusrohren beschrieben, bei dem die Bambusrohre über Verbindungselemente miteinander verbunden sind. Die Verbindungselemente werden dabei über ein Klebe- oder Vergussmittel an den freien Enden des Bambusrohres angespritzt, wodurch eine stoffschlüssige Verbindung entsteht, welche die Ungeradheiten des Bambusrohres ausgleicht. Nachteilig bei diesem Verbindungsprinzip sind insbesondere die große Menge an benötigter Vergussmasse und der hohe Zeitbedarf, der zu ihrer Aushärtung erforderlich ist. Ferner führt die Verwendung eines flüssigen Klebstoffs bei der Herstellung der Verbindung zu einer ungünstigen und umständlichen Handhabbarkeit, welche zu unerwünschten Verschmutzungen der zu verbindenden Bauteile und der Umgebung führen kann.

Das deutsche Gebrauchsmuster DE 89 00 382 U1 schlägt ein Verbindungselement zur Verbindung von Bambusstäben vor, welches mit einem zylindrischen Stutzen in ein Bambusrohr eingesteckt wird. Anschließend wird das Verbindungselement mit Hilfe einer beispielsweise aus Glasfaserbändern und Epoxidharz bestehenden Manschette am Bambusrohr befestigt. Diese Art der Verbindung ist mit hohem Aufwand verbunden und erfordert ebenfalls den Einsatz eines Klebstoffes, der mit den oben beschriebenen Nachteilen einhergeht.

Aus der DE 102 18 597 C2 ist ein System zur Herstellung eines Trag- oder Stabwerkes bekannt, welches ein Zusammenfügen von Bambusrohren nach dem Steckprinzip ermöglicht. Hierzu werden zunächst geeignete Fügeflächen am Bambusrohr und an den aus festem, nachwachsendem Rohstoff bestehenden Verbindungselementen angebracht. Die Befestigung der Bambusrohre an den Verbindungselementen erfolgt mit Hilfe eines Leimes oder durch Klemmen, indem ein am Befestigungselement vorhandener Kern aufgespreizt wird. Nachteilig bei diesem Verfahren sind der hohe Fertigungsaufwand sowie die insbesondere bei der Klemmverbindung nur geringe Beanspruchbarkeit der Verbindung mit Zugkräften.

In der EP 2 251 553 A1 wird ein Verbindungselement für Rohre offenbart, welches für Rohre mit unterschiedlichem Durchmesser, insbesondere Bambusrohre, geeignet ist. Die Rohre werden mit Hilfe bandförmiger Befestigungsmittel am Verbindungselement befestigt, welches hierzu mit Laschen ausgestattet ist. Nachteilig bei diesem Prinzip ist der verhältnismäßig große Bedarf an Bauraum für das Verbindungselement. Des Weiteren ist die Reproduzierbarkeit der Anordnung bei natürlich gewachsenen Bambusrohren durch deren Formtoleranzen eingeschränkt. Auch sind nur mäßige Zug- und Druckkräfte übertragbar, da in axialer Richtung kein direkter Formschluss zwischen den Rohren und den Verbindungselementen hergestellt wird.

In der CN 2 761 727 Y wird eine Anordnung zur Verbindung von Bambusrohren beschrieben, bei der die Bambusrohre Querbohrungen aufweisen. Die Querbohrungen werden von einer Schraube durchdrungen, welche zusammen mit den darauf angeordneten Muttern und Unterlegscheiben als Spannvorrichtung fungiert, die die Bambusrohre gegeneinander presst. Das Innere der Bambusrohre ist zur Verstärkung im Verbindungsbereich mit einem Füllstoff versehen. Im Gegensatz zur CN 2 761 727 Y, bei der die Spannvorrichtung das Bambusrohr durchdringt, zeichnet sich die vorliegende Erfindung dadurch aus, dass das Bambusrohr von der Spannvorrichtung oder einer Aneinanderreihung von Spannvorrichtung und Verstärkungsblech von außen umschlossen wird. Die auf den Rand der Bohrungsöffnung wirkenden Kräfte werden hierdurch auf die Außenfläche des Bambusrohres geleitet, was Längsrisse wirkungsvoll und aufwandsarm verhindert.

Aufgabe der Erfindung ist es, eine Verbindungsanordnung für Bambusrohre zu realisieren, welche einfach herzustellen ist, eine reproduzierbare und genaue Positionierung der Verbindungspartner relativ zueinander ermöglicht und zudem in hohem Maße belastbar ist.

Diese Aufgabe wird erfindungsgemäß dadurch gelöst,
- dass das Bambusrohr eine Querbohrung aufweist,
- dass zwei jeweils eine Öffnung aufweisende Verstärkungsbleche oder zwei Verstärkungsblechbereiche eines Blechstreifens vorgesehen sind, von denen ein Verstärkungsblech/Verstärkungsblechbereich die eine Bohrungsöffnung und das/der andere Verstärkungsblech/Verstärkungsblechbereich die gegenüberliegende Bohrungsöffnung umgibt, und
- dass die beiden Verstärkungsbleche/Verstärkungsblechbereiche durch mindestens eine Spannvorrichtung gegen die Bambusrohraußenwand gepresst sind, und
- dass die Spannvorrichtung das Bambusrohr umschließt.

Hierdurch wird das Bambusrohr im besonders belasteten Verbindungsbereich optimal verstärkt und stabilisiert, so dass die an sich bei Bambusrohren stets gegebene Spaltanfälligkeit sich nicht auswirkt.

Eine solche Verbindungsanordnung für Bambusrohre zeichnet sich aus durch hohe Belastbarkeit, einfache Herstellbarkeit und genaue Positionierbarkeit der Verbindungspartner relativ zueinander. Die Verbindungspartner werden über einen Bolzen miteinander verbunden, der in der Querbohrung gelagert ist.

Hierbei wird unter einem "Bolzen" auch ein hülsenförmiges Element, wie z. B. ein Hohlniet, verstanden.

Der natürliche Werkstoff Bambus zeichnet sich durch ein geringes Gewicht und eine hohe Festigkeit aus. Mit Hilfe der erfindungsgemäßen Verbindungsanordnung lassen sich kostengünstige Stabwerke aus Bambusrohren realisieren, die diese Eigenschaften in besonders vorteilhafter Weise nutzen.

Um ein Bambusrohr mit anderen Bauteilen zu verbinden, ist es zweckmäßig, mindestens eine Querbohrung in das Bambusrohr einzubringen, die von einem Bolzen durchdrungen wird. Am Bolzen können weitere Bauteile befestigt werden, sodass sie mit dem Bambusrohr verbunden sind.

Die Querbohrung führt zu einer Schwächung des Bambusrohres. Ohne zusätzliche Maßnahmen würden bereits geringe Belastungen der Verbindung zu einer Zerstörung des Bambusrohres führen, was auf die Rissanfälligkeit des Bambusmaterials entlang der in Längsrichtung verlaufenden Fasern zurückzuführen ist.

Dieses Problem wird erfindungsgemäß durch Verstärkungsbleche gelöst, die das Bambusrohr im Bereich der Querbohrung zumindest teilweise umhüllen und welche mit Bohrungen zur Durchführung des Bolzens versehen sind. Die Verstärkungsbleche stützen die Bohrungsöffnungen des Bambusrohres ab, nehmen die auf den Bolzen wirkenden Kräfte auf und verteilen sie auf die Oberfläche des Bambusrohres. Hierzu werden die Verstärkungsbleche mittels einer Spannvorrichtung gegen das Bambusrohr gepresst. Statt zweier Verstärkungsbleche kann auch ein durchgehendes Verstärkungsblech zum Einsatz kommen, welches beide Bohrungsöffnungen des Bambusrohres abstützt. Die Spannvorrichtung umschließt dabei das Bambusrohr vollständig.

Die Spannvorrichtung umfasst ein oder mehrere Spannelemente, die vorzugsweise aus Metall bestehen und welche das/die Verstärkungsblech(e) gegen die Oberfläche des Bambusrohres pressen. Das Auftreten von Längsrissen wird hierdurch wirkungsvoll verhindert und die Beanspruchbarkeit der Verbindungsanordnung erheblich erhöht. Ein Spannelement kann beispielsweise als Schelle ausgeführt sein, bei der die Spannkraft über eine Schraube aufgebracht wird. Ebenso ist es möglich, Spannelemente und Verstärkungsbleche einstückig als zusammenhängendes Bauteil auszuführen.

Besonders bevorzugt werden die Spannelemente aus ein oder zwei Blechstreifen hergestellt, die zu diesem Zweck so gebogen werden, dass sie an der Außenfläche des Bambusrohres anliegen, wobei sich die Enden der Blechstreifen überlappen. Nach dem Aufbringen der Vorspannkraft werden die Enden der Blechstreifen beispielsweise durch einen Biegevorgang formschlüssig miteinander verbunden, so dass die Vorspannkraft dauerhaft erhalten bleibt. Alternativ können die Enden der vorgespannten Blechstreifen auch stoffschlüssig, beispielsweise durch Schweißen, miteinander verbunden werden.
Die Spannelemente können auch aus Draht bestehen, der zu diesem Zweck stramm um das Bambusrohr gewickelt wird. Anschließend wird der Draht beispielsweise durch Verdrillen der Drahtenden gegen Lösen gesichert.

Aufgrund des natürlichen Wuchses der Bambuspflanze unterscheiden sich Bambusrohre in der Regel erheblich in ihrer Form. Insbesondere in Stabwerken ist jedoch häufig eine wohldefinierte und reproduzierbare räumliche Lage der Verbindungsstellen der Stäbe relativ zueinander gefordert. Dies ist beispielsweise dann erforderlich, wenn Teile des Stabwerkes als Klappmechanismus ausgeführt werden sollen.

Um derartige Stabwerke aus Bambusrohren herzustellen, müssen die Formtoleranzen der Bambusrohre kompensiert werden. Dies erfolgt erfindungsgemäß durch in den Querbohrungen angeordnete Hülsen, deren Stirnflächen als wohldefinierte Anlageflächen dienen, an denen sich der jeweilige Verbindungspartner oder ein zwischen den Verbindungspartnern angeordnetes Zwischenelement abstützt. Die Hülsen sind in den Querbohrungen axial, d. h. in Richtung ihrer Längsachse, fixiert. Der seitliche Abstand zwischen den Anlageflächen der Verbindungspartner ist hierdurch eindeutig bestimmt.

Bei mehreren Verbindungsstellen eines Bambusrohres weisen sowohl die Querbohrungen als auch die darin angeordneten und axial fixierten Hülsen dieses Bambusrohres wohldefinierte Lagen relativ zueinander auf. Dies ermöglicht es, mit Hilfe der erfindungsgemäßen Verbindungsanordnung Stabwerke, deren Verbindungsstellen wohldefinierte räumliche Lagen besitzen, mit hoher Genauigkeit und ohne aufwändige Justiermaßnahmen reproduzierbar herzustellen.

Alternativ zum Einsatz von Bambusstäben in ihrer natürlichen Form ist es möglich, Bambusrohre oder -Stäbe, zu verwenden, die aus mehreren miteinander verbundenen Einzelteilen bestehen. Derartige Bambusrohre können ebenfalls in der Verbindungsanordnung zum Einsatz kommen. Auf die beschriebene Toleranzkompensation mittels Hülsen kann dann verzichtet werden, wenn die aus Einzelteilen zusammengesetzten Stäbe wohldefinierte Geometrien aufweisen.

Im Folgenden wird eine mögliche Ausführungsform der vorliegenden Erfindung anhand der beigefügten beispielhaften Zeichnungen näher erläutert. Es zeigen Fig. 1 ein unbearbeitetes Bambusrohr, Fig. 2 ein bearbeitetes Bambusrohr mit Querbohrungen und Hülsen, Fig. 3 eine perspektivische Darstellung einer erfindungsgemäßen Verbindungsanordnung, Fig. 4 eine perspektivische Darstellung und eine Explosionsdarstellung einer erfindungsgemäßen Verbindungsanordnung mit Hülse, Fig. 5 eine perspektivische Darstellung einer erfindungsgemäßen Verbindungsanordnung mit Spannelementen aus Draht, Fig. 6 eine perspektivische Darstellung einer Drehgelenk-Verbindung zweier seitlich versetzt angeordneter Bambusrohre und Fig. 7 eine perspektivische Darstellung einer Drehgelenk-Verbindung zweier in einer Ebene angeordneter Bambusrohre.

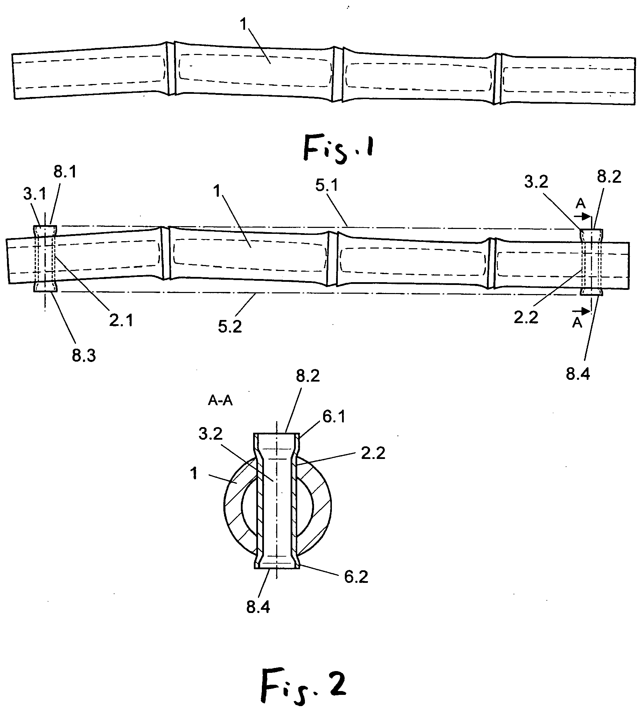

Fig. 1 zeigt ein beispielhaftes Bambusrohr 1 in unbearbeitetem Zustand. Aufgrund des unregelmäßigen natürlichen Wuchses weicht die Form des Bambusrohres in der Regel deutlich von einer gleichmäßigen Zylinderform ab. Ferner ist die Form von Bambusrohren exemplarspezifisch, so dass sich zwei Bambusrohre beispielsweise hinsichtlich Geradheit und Durchmesser unterscheiden.
Fig. 2 zeigt ein bearbeitetes Bambusrohr 1. Das Bambusrohr weist zwei Querbohrungen 2.1 und 2.2 auf. Die Querbohrungen besitzen eine wohldefinierte Lage und Orientierung relativ zueinander. Im dargestellten Beispiel verlaufen die Mittelachsen der Querbohrungen parallel zueinander und ihr Abstand entspricht einem vorgegebenen Wert. In den Querbohrungen sind Hülsen 3.1 und 3.2 angeordnet. Die Hülsen besitzen die gleiche Länge und sind derart in den Bohrungen positioniert, dass ihre Stirnflächen fluchten, das heißt die Stirnflächen 8.1 und 8.2 liegen in einer gemeinsamen Ebene 5.1 und die Stirnflächen 8.3 und 8.4 liegen in einer gemeinsamen Ebene 5.2. Die Ebenen 5.1 und 5.2 sind zueinander parallel angeordnet und weisen einen vorgegebenen Abstand voneinander auf. Um die Hülsen in dieser Position zu fixieren und somit die Stirnflächen der Hülsen als wohldefinierte Anlageflächen nutzen zu können, werden die Enden der Hülsen nach dem Einführen in die Bohrung aufgeweitet, so dass die entstehenden Verdickungen der Hülsen mit den Endbereichen der Bohrungen abschließen. Das bewirkt, dass eine axiale Verschiebung der Hülse relativ zum Bambusrohr nicht mehr möglich ist. Die Schnittdarstellung A-A verdeutlicht dies am Beispiel der Hülse 3.2 mit ihren durch Aufweiten erzeugten Verdickungen 6.1 und 6.2.
Die Fixierung der Hülsen durch Aufweiten stellt eine besonders einfache und daher kostengünstige Maßnahme zum Fixieren der Hülsen dar. Selbstverständlich können die Hülsen auch durch andere Maßnahmen in der gewünschten Position axial fixiert werden, wie zum Beispiel durch Aufpressen von Sicherungsringen.
Verschiedene Exemplare von Bambusrohren können in der dargestellten Weise mit Querbohrungen und Hülsen versehen werden, so dass die Querbohrungen und die Stirnflächen der Hülsen an jedem Bambusrohr relativ zueinander identisch angeordnet und ausgerichtet sind. Hierdurch besitzen die an den Innen-und Stirnflächen der Hülsen ausgerichteten Bauteile stets eine reproduzierbare räumliche Lage relativ zueinander, unabhängig von der unregelmäßigen natürlichen Grundform des jeweiligen Bambusrohres. Dies ermöglicht den Aufbau von Stabwerken aus Bambusrohren, deren Verbindungsstellen identische räumliche Lagen und Orientierungen aufweisen.
Die Querbohrungen führen aufgrund des Materialabtrags zu einer Verringerung der Belastbarkeit des Bambusrohres. Insbesondere kann es durch Einleiten von Kräften im Bereich der Querbohrung zu einer Rissbildung kommen, da die Fasern des Bambusrohres größtenteils in dessen Längsrichtung verlaufen. Die nachfolgend beschriebenen Maßnahmen wirken einer solchen Rissbildung entgegen und führen zu einer hohen Belastbarkeit der Verbindungsanordnung.

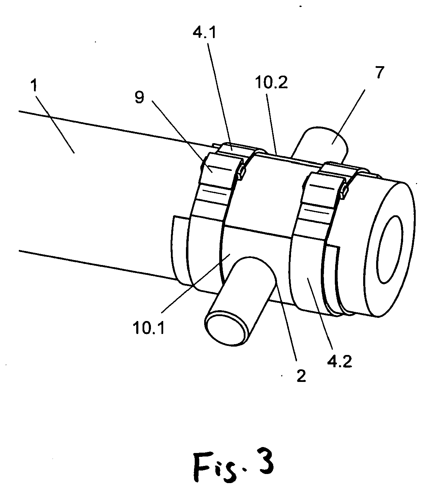

In Fig. 3 ist ein Ende eines Bambusrohres 1 mit einer erfindungsgemäßen Verbindungsanordnung dargestellt. In das Bambusrohr ist eine Querbohrung 2 eingebracht, in der ein Bolzen 7 gelagert ist, an dem ein beliebiger Verbindungspartner befestigt und auf diese Weise mit dem Bambusrohr 1 verbunden werden kann. Am Bambusrohr 1 sind beiderseits der Querbohrung 2 die ringförmigen Spannelemente 4.1 und 4.2 angeordnet. Die Spannelemente sind derart vorgespannt, dass sie eng an der Außenfläche des Bambusrohres anliegen und radiale Druckkräfte auf das Bambusrohr ausüben. Hierdurch resultiert im Bambusrohr ein mechanischer Spannungszustand, welcher einem Entstehen von Längsrissen entgegenwirkt, indem die Fasern des Bambusrohres aneinander gepresst werden. Eine weitere Steigerung der Belastbarkeit wird durch die Verstärkungsbleche 10.1 und 10.2 erreicht, die ebenfalls von der Querbohrung durchsetzt sind und an der Außenfläche des Bambusrohres anliegen. Der Bolzen 7 leitet die auf ihn wirkende Kraft zumindest teilweise in die Verstärkungsbleche 10.1 und 10.2 ein. Da sich letztere an der Außenfläche des Bambusrohres abstützen und durch die Spannelemente fixiert werden, wird die Kraft auf eine verhältnismäßig große Fläche verteilt, so dass nur eine geringe Beanspruchung des Bambusrohres resultiert. Durch diese Maßnahme können in das Bambusrohr über den Bolzen hohe Kräfte eingeleitet werden, ohne dass es zu einem Versagen der Verbindungsanordnung kommt.
Ein Spannelement 4 besteht vorzugsweise aus einem Blechstreifen, welcher so gebogen ist, dass er an der Außenfläche des Bambusrohres anliegt und dieses umschließt. Anschließend wird die gewünschte Vorspannkraft aufgebaut, indem die Enden des Blechstreifens mit einer äußeren Zugkraft beaufschlagt werden. In diesem vorgespannten Zustand werden die Enden des Blechstreifens miteinander verbunden, so dass die Vorspannkraft im Blechstreifen auch nach Entfernen der äußeren Zugkraft bestehen bleibt. Das Verbinden der Enden des Blechstreifens kann zum Beispiel dadurch erfolgen, dass die Enden des Blechstreifens durch Biegen so verformt werden, dass sie einen dauerhaften Formschluss 9 miteinander bilden. Alternativ ist auch eine stoffschlüssige Verbindung der Enden des Blechstreifens möglich, beispielsweise durch Schweißen.

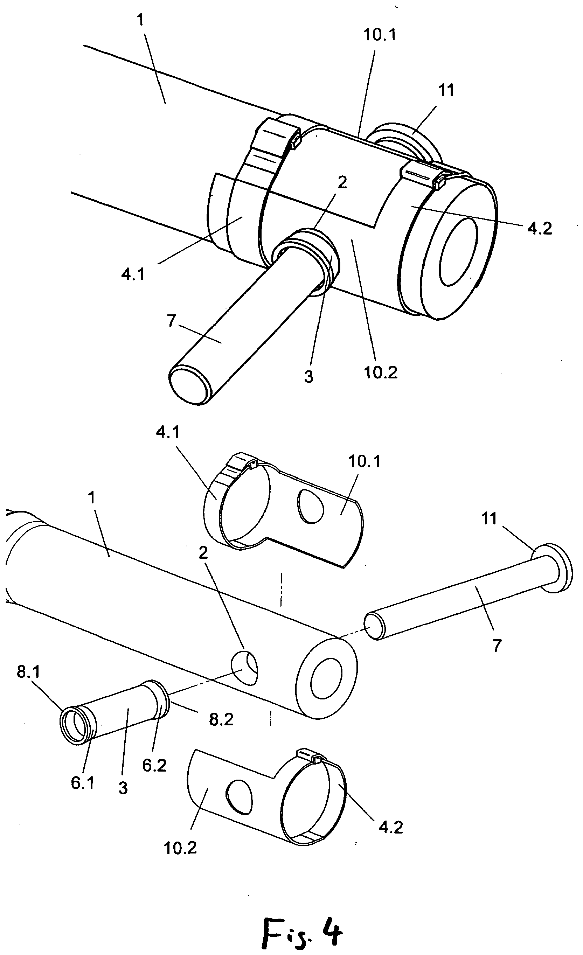

In Fig. 4 ist eine erfindungsgemäße Verbindungsanordnung dargestellt, bei der zusätzlich eine Hülse 3 in der Querbohrung 2 angeordnet ist. Zum besseren Verständnis ist die Anordnung im oberen Teil der Abbildung in zusammengebauter Form und im unteren Teil als Explosionszeichnung dargestellt. Die Spannelemente 4.1 und 4.2 sind zusätzlich mit Verstärkungsblechen 10.1 und 10.2 versehen, die ebenfalls von der Querbohrung durchsetzt sind. Die Verstärkungsbleche sind so geformt, dass sie an der Außenfläche des Bambusrohres anliegen. In der Hülse 3 ist ein Bolzen 7 gelagert. Die Hülse 3 leitet die auf den Bolzen wirkende Kraft zumindest teilweise in die Verstärkungsbleche 10.1 und 10.2 ein. Da sich letztere an der Außenfläche des Bambusrohres abstützen und durch die Klemmelemente fixiert werden, wird die Kraft auf eine verhältnismäßig große Fläche verteilt, so dass nur eine geringe Beanspruchung des Bambusrohres resultiert. In der beispielhaften Darstellung sind die Verstärkungsbleche einstückig mit den Spannelementen ausgeführt. Die Verstärkungsbleche ragen unter das jeweils andere Spannelement und werden von diesem zusätzlich fixiert. Abweichend von der dargestellten einstückigen Ausführung von Spannelement und Verstärkungsblech können diese Elemente selbstverständlich auch als separate Teile ausgeführt sein. Ferner ist es möglich, sämtliche Spannelemente und Verstärkungsbleche einer Verbindungsanordnung in Form eines einzigen zusammenhängenden Bauteils zu realisieren.

Die Enden der Hülse 3 sind aufgeweitet, so dass die entstehenden Verdickungen 6.1 und 6.2 an den Verstärkungsblechen anliegen und die Hülse axial fixieren. Um den in der Hülse 3 gelagerten Bolzen 7 einseitig axial zu fixieren, ist an diesem beispielhaft ein Kragen 11 angebracht, der sich an der Stirnfläche 8.2 abstützt. Die andere Stirnfläche 8.1 der Hülse kann als wohldefinierte Anlagefläche für ein mit dem Bambusrohr zu verbindendes Bauteil dienen.

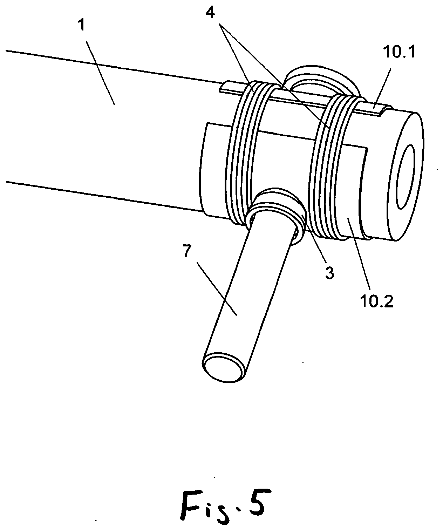

Fig. 5 zeigt eine Variante der Verbindungsanordnung, bei der die Spannelemente aus Draht bestehen. Dieser ist beiderseits der Querbohrung um das Bambusrohr gewickelt und übt die erforderlichen radialen Druckkräfte auf dieses aus. Durch die Spannelemente aus Draht werden ferner die Verstärkungsbleche 10.1 und 10.2 fixiert. Um ein Lösen des Drahtes zu verhindern, können dessen Enden beispielsweise miteinander verdrillt werden.

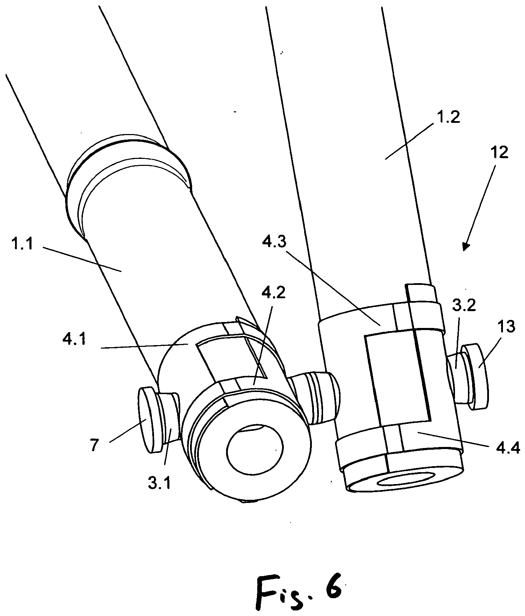

Fig. 6 zeigt eine laterale Drehgelenk-Verbindung 12, welche zwei seitlich versetzt angeordnete Bambusrohre 1.1 und 1.2 miteinander verbindet. Die Bambusrohre weisen erfindungsgemäße Verbindungsanordnungen mit Spannelementen 4.1 bis 4.4 auf und sind durch die Bolzen 7 schwenkbar miteinander verbunden. Das Sicherungselement 13 fixiert die Hülsen axial auf dem Bolzen. Die mittleren Stirnflächen der Hülsen 3.1 und 3.2 stützen sich aneinander ab. Hierdurch wird erreicht, dass die Stirnflächen der Hülsen einen definierten seitlichen Abstand zu den Stirnflächen weiterer Hülsen besitzen, die in gleicher Weise an den Bambusrohren angebracht werden können. Auf diese Weise lassen sich unabhängig von den natürlichen Formtoleranzen der Bambusrohre Stabwerke mit hoher Genauigkeit reproduzierbar herstellen, da die Verbindungsstellen wohldefinierte Lagen und Positionen relativ zueinander besitzen.

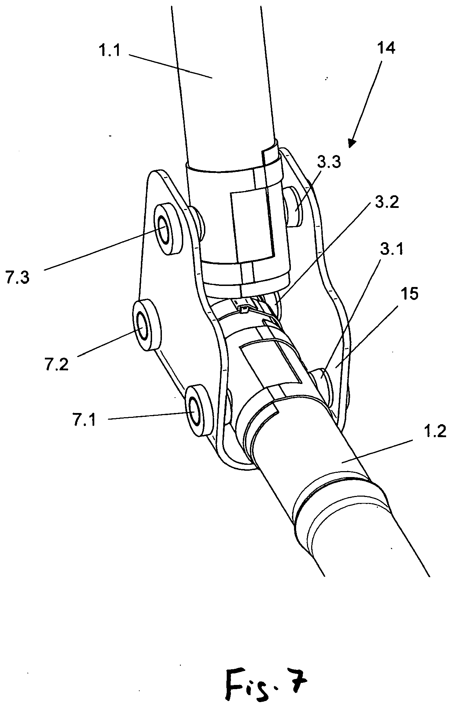

Fig. 7 zeigt eine komplanare Drehgelenk-Verbindung 14, bei der die Bambusrohre 1.1 und 1.2 so miteinander verbunden sind, dass sie in einer Ebene liegen. Zu diesem Zweck erfolgt die Verbindung der Bambusrohre über ein Verbindungselement 15, welches beispielhaft als Verbindungsblech ausgeführt ist. Das Verbindungsblech ist schwenkbar mit dem Bambusstab 1.1 und fest mit dem Bambusrohr 1.2 verbunden. Die Bolzen 7.1 und 7.2 sind zwei nebeneinander angeordneten erfindungsgemäßen Verbindungsanordnungen zugeordnet und befestigen das Bambusrohr 1.2 am Verbindungsblech. Das Bambusrohr 1.1 ist über den Bolzen 7.3 mit dem Verbindungsblech verbunden, so dass es um die Achse des Bolzens geschwenkt werden kann.

Abweichend von der Anordnung in Fig. 7 kann die Verbindung der Bambusrohre auch dadurch erfolgen, dass jedes Bambusrohr an einem eigenen Verbindungselement befestigt ist, wobei diese beiden Verbindungselemente miteinander verbunden sind.

Mit Hilfe der erfindungsgemäßen Verbindungsanordnung lassen sich beliebige Stabwerke aus Bambusrohren realisieren. Insbesondere ist die Verbindungsanordnung für den Einsatz in klappbaren Stabwerken geeignet, wie sie unter anderem bei Kinderwagen verwendet werden. Auf diese Weise können leichte, stabile und zugleich ressourcenschonende Kinderwagen hergestellt werden.

### Bezugszeichenliste

- 1: Bambusrohr
- 2: Querbohrung
- 3: Hülse
- 4: Spannelement
- 5: Ebene
- 6: Verdickung
- 7: Bolzen
- 8: Stirnfläche
- 9: Formschluss 10Verstärkungsblech
- 11: Kragen
- 12: Laterale Drehgelenk-Verbindung
- 13: Sicherungselement
- 14: Komplanare Drehgelenk-Verbindung
- 15: Verbindungselement

Mehrmals auftretende Elemente mit gleichem Bezugszeichen werden in den Zeichnungen durch Nummern gekennzeichnet, die über einen Punkt an das Bezugszeichen angehängt sind.

## Patentansprüche

1. Verbindungsanordnung für Bambusrohre insbesondere eines Kinderwagens, wobei die Verbindungsanordnung mindestens ein Bambusrohr mit einer Querbohrung aufweist, die zu beiden Seiten des Bambusrohres in der Bambusrohraußenwand eine Bohrungsöffnung bildet,
**dadurch gekennzeichnet,**
- **dass** zwei jeweils eine Öffnung aufweisende Verstärkungsbleche (10.1, 10.2) oder zwei Verstärkungsblechbereiche eines Blechstreifens vorgesehen sind, von denen ein Verstärkungsblech/Verstärkungsblechbereich die eine Bohrungsöffnung und das/der andere Verstärkungsblech/Verstärkungsblechbereich die gegenüberliegende Bohrungsöffnung umgibt, und
- **dass** die beiden Verstärkungsbleche (10.1, 10.2) / Verstärkungsblechbereiche durch mindestens eine Spannvorrichtung gegen die Bambusrohraußenwand gepresst sind, und
- **dass** die Spannvorrichtung das Bambusrohr umschließt.

2. Verbindungsanordnung nach Anspruch 1, **dadurch gekennzeichnet, dass** jedes/jeder Verstärkungsblech/Verstärkungsblechbereich die die Bohrungsöffnung umgebenden Bereiche der Bambusrohraußenwand abstützt und/oder der Rand der Öffnung im jeweiligen Verstärkungsblech/Verstärkungsblechbereich den Rand der Bohrungsöffnung abstützt.

3. Verbindungsanordnung nach Anspruch 1 oder 2, **dadurch gekennzeichnet, dass** die Spannvorrichtung mindestens ein die Verstärkungsbleche/ Verstärkungsblechbereiche übergreifendes Spannelement (4) aufweist.

4. Verbindungsanordnung nach Anspruch 3, **dadurch gekennzeichnet, dass** das Spannelement (4) eine Schelle ist.

5. Verbindungsanordnung nach Anspruch 3 oder 4, **dadurch gekennzeichnet, dass** das Spannelement einstückig mit mindestens einem der Verstärkungsbleche/Verstärkungsblechbereiche verbunden ist.

6. Verbindungsanordnung nach einem der vorherigen Ansprüche, **dadurch gekennzeichnet, dass** in der Querbohrung ein Bolzen (7) einliegt, der zumindest mit einem Bolzenende über eines der Verstärkungsbleche/Nerstärkungsblechbereiche seitlich hinausragt.

7. Verbindungsanordnung nach Anspruch 6, **dadurch gekennzeichnet, dass** in der Querbohrung eine Hülse (3) einliegt, die den Bolzen (7) umgibt.

8. Verbindungsanordnung nach **Anspruch 6 oder 7, dadurch gekennzeichnet, dass** auf einer oder beiden Seiten der Verbindungsanordnung ein Verbindungselement insbesondere ein Verbindungsblech (15) angeordnet ist, das von dem Bolzen (7) durchdrungen ist.

9. Verbindungsanordnung nach Anspruch 8, **dadurch gekennzeichnet, dass** das Verbindungselement/Verbindungsblech (15) die Verbindung U-förmig umgibt.

10. Verbindungsanordnung nach Anspruch 8 oder 9, **dadurch gekennzeichnet, dass** am Verbindungselement/Verbindungsblech (15) mindestens ein weiteres Bambusrohr befestigt insbesondere angelenkt ist.

11. Verbindungsanordnung nach Anspruch 8 oder 9, **dadurch gekennzeichnet, dass** mit dem Verbindungselement/Verbindungsblech (15) ein weiteres Verbindungselement/Verbindungsblech insbesondere gelenkig verbunden ist.

12. Verbindungsanordnung nach einem der Ansprüche 6 bis 11, **dadurch gekennzeichnet, dass** der Bolzen (7) die Querbohrung eines daneben liegenden Bambusrohres durchdringt.

13. Verbindungsanordnung nach einem der vorherigen Ansprüche, **dadurch gekennzeichnet, dass** die Bambusrohre aus mehreren miteinander verbundenen Einzelteilen insbesondere aus einzelnen Bambusteilen bestehen.

14. Verbindungsanordnung nach einem der Ansprüche 3 bis 13, **dadurch gekennzeichnet, dass** das Spannelement (4) zumindest teilweise aus einem Blechstreifen besteht, dass der Blechstreifen derart gebogen ist, dass er an der Außenfläche des Bambusrohres (1) anliegt und letzteres vollständig umschließt und dass die Enden des Blechstreifens sich überlappen und formschlüssig und/oder stoffschlüssig miteinander verbunden sind.

15. Verbindungsanordnung nach **Anspruch 7, dadurch gekennzeichnet, dass** eine axiale Fixierung der Hülse (3) herbeigeführt ist, indem die Hülse (3) nach dem Einführen in die Querbohrung (2) plastisch verformt ist.

## Claims

1. Connection arrangement for bamboo tubes, in particular of a baby carriage, the connection arrangement comprising at least one bamboo tube with a transverse bore which forms a bore opening on both sides of the bamboo tube in the bamboo tube outer wall, **characterized in that**
- two reinforcing plates (10.1, 10.2) each having an opening are provided, or two reinforcing plate regions of a sheet metal strip, of which one reinforcing plate / reinforcing plate region surrounds a bore opening and the other reinforcing plate / reinforcing plate region surrounds the opposing bore opening,
- the two reinforcing plates (10.1, 10.2) / reinforcing plate regions are pressed against the bamboo pipe outer wall by at least one clamping device, and
- the clamping device encloses the bamboo tube.

2. Connection arrangement according to claim 1, **characterized in that** each reinforcing plate / reinforcing plate region supports the regions of the bamboo outer wall surrounding the bore opening and / or the edge of the opening in the respective reinforcing plate / reinforcing plate region supports the edge of the bore opening.

3. Connection arrangement according to claim 1 or 2, **characterized in that** the clamping device has at least one tensioning element (4) which overlaps the reinforcing plates / reinforcing plate regions.

4. Connection arrangement according to Claim 3, **characterized in that** the tensioning element (4) is a clamp.

5. Connection arrangement according to claim 3 or 4, **characterized in that** the tensioning element is integrally connected to at least one of the reinforcing plate / reinforcing plate regions.

6. Connection arrangement according to one of the preceding claims, **characterized in that** a bolt (7), which protrudes laterally beyond at least one of the reinforcing plates / reinforcing plate regions, is situated in the transverse borehole.

7. Connection arrangement according to Claim 6, **characterized in that** a sleeve (3) surrounds the bolt (7) in the transverse bore.

8. Connection arrangement according to Claim 6 or 7, **characterized in that** a connecting element, in particular a connecting plate (15), is penetrated by the bolt (7) on one or both sides of the connecting arrangement.

9. Connection arrangement according to Claim 8, **characterized in that** the connecting element / connecting plate (15) surrounds the connection in a U-shaped manner.

10. Connection arrangement according to Claim 8 or 9, **characterized in that** at least one further bamboo tube is fastened, in particular hinged, to the connecting element / connecting plate (15).

11. Connection arrangement according to Claim 8 or 9, **characterized in that** a further connecting element / connecting plate is connected or especially hinged to the connecting element / connecting plate (15).

12. Connection arrangement according to one of Claims 6 to 11, **characterized in that** the bolt (7) penetrates the transverse bore of an adjacent bamboo tube.

13. Connection arrangement according to one of the preceding claims, **characterized in that** the bamboo tubes consist of a plurality of individual parts, in particular from individual bamboo parts, which are connected to one another.

14. Connection arrangement according to one of Claims 3 to 13, **characterized in that** the tensioning element (4) consists at least partially of a sheet metal strip, that the sheet metal strip is bent in such a way that it lies against the outer surface of the bamboo tube (1) and completely encloses the latter and that the ends of the sheet metal strip overlap and are connected to one another in a form-fitting and / or material-locking manner.

15. Connection arrangement according to Claim 7, **characterized in that** an axial fixing of the sleeve (3) is effected by the fact that the sleeve (3) is plastically deformed after being inserted into the transverse bore (2).

## Revendications

1. Agencement de liaison pour des tuyaux de bambou, en particulier pour une poussette, l'agencement de liaison comprenant au moins un tube de bambou avec un perçage transversal qui forme des ouvertures de forage des deux côtés du tuyau de bambou dans la surface extérieure du tuyau de bambou **caractérisé en ce que**
- deux tôles de renfort (10.1, 10.2) ayant chacune une ouverture ou deux zones de renfort d'une tôle de renfort sont munies, de laquelle la première tôle de renfort / zone de renfort encercle la première ouverture de forage et la deuxième tôle de renfort / zone de renfort encercle la deuxième ouverture de forage,
- les deux tôles de renfort (10.1, 10.2) / zones de renfort sont pressées contre la surface du tuyau de bambou par un dispositif de serrage et
- le dispositif de serrage environne le tuyau de bambou.

2. Agencement de liaison selon la revendication 1, **caractérisé en ce que** chaque tôle de renfort / zone de renfort appuie la zone de surface du tuyau de bambou proche des ouvertures de forage et / ou le bord de l'ouverture dans la tôle de renfort / zone de renfort respective appuie le bord de l'ouverture de forage.

3. Agencement de liaison selon la revendication 1 ou 2, **caractérisé en ce que** le dispositif de serrage présent au moins un élément de serrage qui déborde sur les tôles de renfort / zones de renfort.

4. Agencement de liaison selon la revendication 3, **caractérisé en ce que** l'élément de serrage (4) est un collier.

5. Agencement de liaison selon la revendication 3 ou 4, **caractérisé en ce que** l'élément de serrage est connecté avec au moins une des tôles de renfort / zones de renfort en une pièce.

6. Agencement de liaison selon une des revendications précédentes, **caractérisé en ce qu'**un boulon (7) est situé dans le perçage transversal, qui déborde latéral avec une extrémité au moins une des tôles de renfort / zones de renfort.

7. Agencement de liaison selon la revendication 6, **caractérisé en ce qu'**une douille (3) est située dans le perçage transversal qui entoure le boulon (7).

8. Agencement de liaison selon la revendication 6 ou 7, **caractérisé en ce qu'**un élément de liaison, en particulier une tôle de connexion (15), qui est pénétré du boulon (7), est située à une ou aux deux côtes de l'agencement de liaison.

9. Agencement de liaison selon la revendication 8, **caractérisé en ce que** l'élément de liaison/ tôle de connexion (15) entoure la liaison en forme de U.

10. Agencement de liaison selon la revendication 8 ou 9, **caractérisé en ce qu'**au moins un autre tuyau de bambou est attaché, en particulier charnière, à l'élément de liaison/ tôle de connexion (15).

11. Agencement de liaison selon la revendication 8 ou 9, **caractérisé en ce qu'**au moins un autre élément de liaison/ tôle de connexion est attaché, en particulier charnière, à l'élément de liaison/tôle de connexion (15).

12. Agencement de liaison selon une des revendications 6 à 11, **caractérisé en ce que** le boulon (7) pénètre le perçage transversal d'un du tuyau de bambou voisin.

13. Agencement de liaison selon une des revendications précédentes, **caractérisé en ce que** les tuyaux de bambou se composent de plusieurs pièces, en particulier de pièces détachées de bambou.

14. Agencement de liaison selon une des revendications 3 à 13, **caractérisé en ce que** l'élément de serrage (4) se compose au moins en partie d'une feuille métallique, que la feuille métallique est courbée de sorte, qu'elle est alignée sur la surface du tuyau de bambou (1), qu'elle environne le tuyau de bambou, et que les extrémités de la feuille métallique chevauchent et que les extrémités de la feuille métallique sont relié par connexion de forme et/ou par connexion cohésive.

15. Agencement de liaison selon la revendication 7 **caractérisé en ce qu'**une fixation axiale de la douille est réalisée par une déformation plastique de la douille (3), après qu'elle est engagée dans le perçage transversal (2).
